(19) Europäisches Patentamt
European Patent Office
Office européen des brevets

(11) **EP 1 479 532 B1**

(12) **EUROPEAN PATENT SPECIFICATION**

(45) Date of publication and mention
of the grant of the patent:
**13.08.2008 Bulletin 2008/33**

(51) Int Cl.:
***B60B 1/00*** (2006.01)

(21) Application number: **03253170.9**

(22) Date of filing: **21.05.2003**

(54) **Method for increasing structural strength of spokes of a bicycle or a motorcycle**

Verfahren zur Erhöhung der Strukturfestigkeit von Speichen eines Fahrrads oder Motorfahrrads

Méthode pour augmenter la résistance structurale des rayons de bicyclette ou motocyclette

(84) Designated Contracting States:
**AT BE BG CH CY CZ DE DK EE ES FI FR GB GR
HU IE IT LI LU MC NL PT RO SE SI SK TR**
Designated Extension States:
**LT**

(43) Date of publication of application:
**24.11.2004 Bulletin 2004/48**

(73) Proprietor: **Sha Dar Accessories Co. Ltd.
Shu Lin City,
Taipei (TW)**

(72) Inventor: **Chen, Wen-Hsuan
Shu Lin City,
Taipei (TW)**

(74) Representative: **Alexander, Thomas Bruce et al
BOULT WADE TENNANT,
Verulam Gardens
70 Gray's Inn Road
London WC1X 8BT (GB)**

(56) References cited:
**DE-U- 8 603 889        GB-A- 391 734
US-A- 1 660 319**

**EP 1 479 532 B1**

**Description**

BACKGROUND OF THE INVENTION

The present invention is related to a method for increasing structural strength of spokes, and more particularly to a processing method which can increase the shear strength of the neck section and bending section of the spoke and increase the cross-sectional area thereof.

Taiwanese Patent Publication Nos. 261953, 317821, 385284, 398423, 4485851, 516517 and 511588 disclose structures for connecting the hub with the spokes of a wheel of a bicycle or a motorcycle. The above Patents provide measures for more conveniently assembling and disassembling the spokes. However, it is not considered that the spokes may be broken due to insufficient structural strength.

Document DE 86 03 889 U of Wilhelm Berg GmbH & Co. discloses a spoke with relatively large diameter sections at each end, either side of a relatively small diameter section.

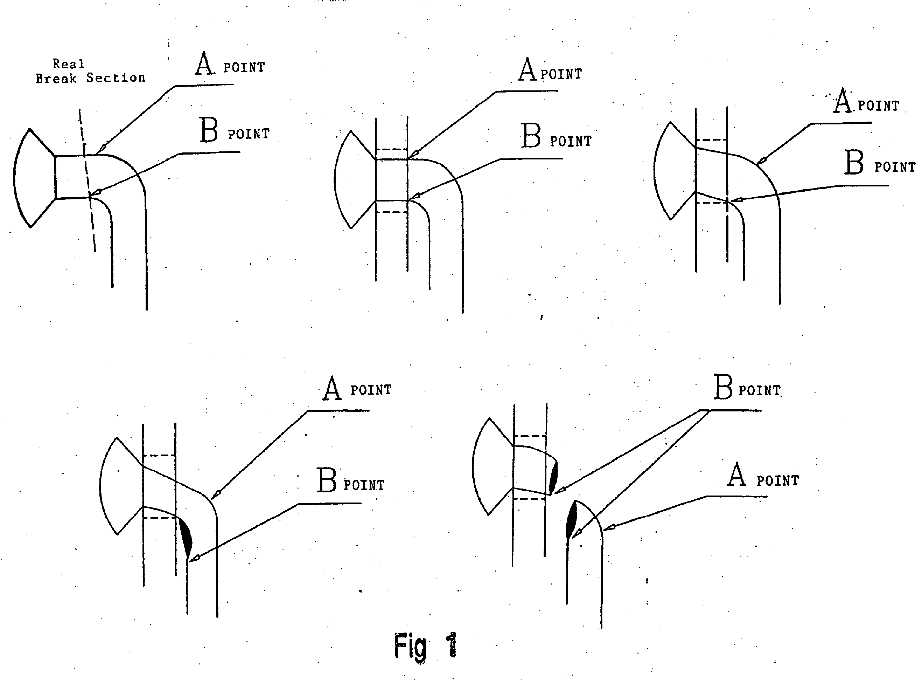

The spokes are mostly made of metal wire material such as carbon steel, stainless steel, titanium, alloy, etc. The selected wire material has good resilience and tensile strength. However, the shear strength of the metal is only about half the tensile strength. This is the major reason why the spoke always breaks first at the neck section. In a tension test of the spoke, the same result is obtained, that is, the neck section of the spoke is shorn (as shown in Fig. 1, wherein point B bears greatest shearing force).

To a wheel , in case one single spoke is broken, the other spokes will suffer uneven force and successively break. This will lead to danger to a rider.

Many trials have been made by manufacturers to reform the spoke structures (as Table 1). Mainly, the diameter of the wire is enlarged (or partially enlarged). This is effective. However, the consumption of material is increased and the weight of the product is increased. Therefore, this measure is not widely used. With respect to the spoke with partially enlarged diameter (such as double butted spoke and swaged spoke), the larger diameter wire is ground or swaged to partially reduce the diameter. The processing cost is high and the product still has considerable weight. In other words, it seems that it is impossible to satisfy all the requirements for low cost, light weight and high strength.

SUMMARY OF THE INVENTION

The present invention provides a method of manufacture of a spoke for a bicycle or motorcycle in which structural strength of parts of the spoke is increased during manufacture, the method comprising:

starting with a section of constant cross-section wire and using a mechanical process to compress the wire a plurality of times and by the compressions:
reducing a cross-sectional area of a spoke main body portion of the wire;
enlarging a cross-section of a bending section and a neck section of the wire;
increasing structural strength of the bending section; and
hardening the neck section and the bending section to enhance the strength thereof; and
subsequently bending the wire at the bending section to leave the neck section bent away from the main body.

It is therefore a primary object of the present invention to provide a method for increasing structural strength of spokes of a bicycle or a motorcycle. The spoke is many times compressed to locally increase the density of the crystal lattice of the metal material and enhance the strength thereof so as to harden the bending section of the spoke and increase the shear strength thereof. Also, the diameter of the spoke is increased due to compression in accordance with the principle that shear load (kgf) = shear strength (kgf/mm$^2$) x cross-sectional area (mm$^2$). When the shear load of the spoke $\geq$ tensile strength of the wire material, the strength of the spoke will reach the maximum value (equal to the tensile strength of the wire material). That is, the neck section of the spoke is not shorn off, but the spoke main body is normally pulled off.

The present invention can be best understood through the following description and accompanying drawings wherein:

BRIEF DESCRIPTION OF THE DRAWINGS

Fig. 1 shows the breakage of a conventional spoke;
Fig. 2 shows the structure of the spoke made by the method of the present invention;
Fig. 3 is a curve diagram of the shearing force versus the number of times of compression of the spoke of the present invention; and

Fig. 4 shows that the spoke is gradually compressed and formed by the method of the present invention.

DETAILED DESCRIPTION OF THE PREFERRED EMBODIMENTS

The method for increasing structural strength of spokes of a bicycle or a motorcycle of the present invention adopts a mechanically processing measure for increasing the structural strength of the neck section 3 and bending section 2 of the spoke 1. The spoke processed by the method of the present invention is described in comparison with the conventional spoke as follows:

A spoke main body 1 made of stainless steel SS 304 by means of conventional technique is exemplified. The shearing strength is about_60 kgf/mm$^2$ and the tensile strength is about 110 kgf/mm$^2$. Therefore, in the case that the diameter of the spoke is 2.0mm, then:

1. The maximum tension force which the spoke material can bear is:

$$110 \text{ kgf/mm}^2 \times [(2.0/2)^2 \times \pi] \text{ mm}^2 = 345 \text{kgf}$$

2. The maximum shearing force which the spoke can bear is: (Actually, the spoke is not normally shorn off. The cross-section is about 4.5~5.0.)

$$60 \text{ kgf/mm}^2 \times [4.5\text{~}5.0] \text{ mm}^2 = 270\text{~}300 \text{kgf}$$

It can be known from the above result that the tension force of the spoke can be up to 340kg. However, in fact, the spoke will break at about 280kg.

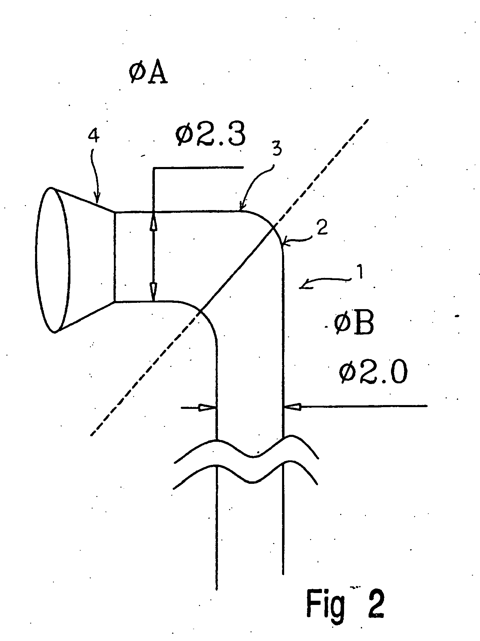

The spoke wire is three times compressed to naturally enlarge the diameter of the neck section 3 of the spoke main body 1 and a thickened section is formed at the bending section 2 as shown in Fig. 2. The original wire diameter φB (φ2:0) of the spoke main body 1 will be changed into φA (φ2.3). The ratio is about 1.15 increased. After such processed, the tensile strength and shear strength of this section are both increased. Accordingly, almost without increasing the amount of the material, the structural strength of the spoke is increased.

The processed spoke is tested as shown in Table 2 made by Taiwan Technology Co., Lid.

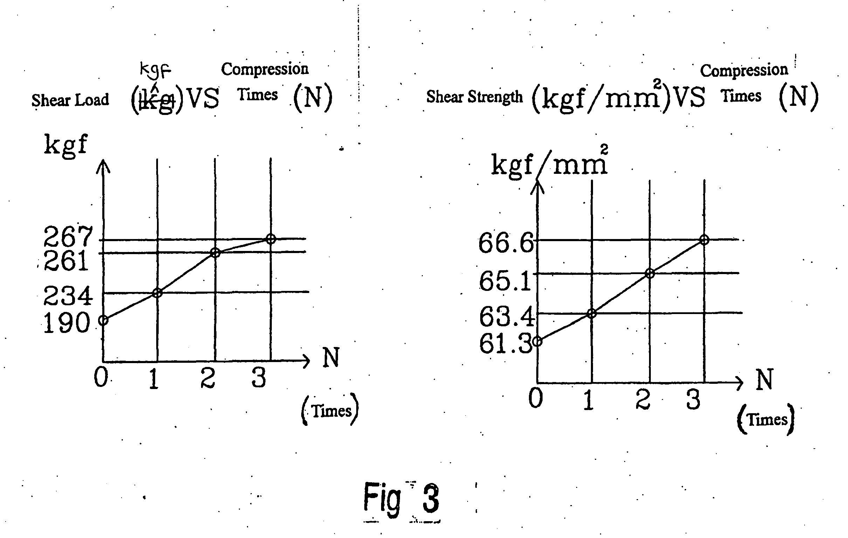

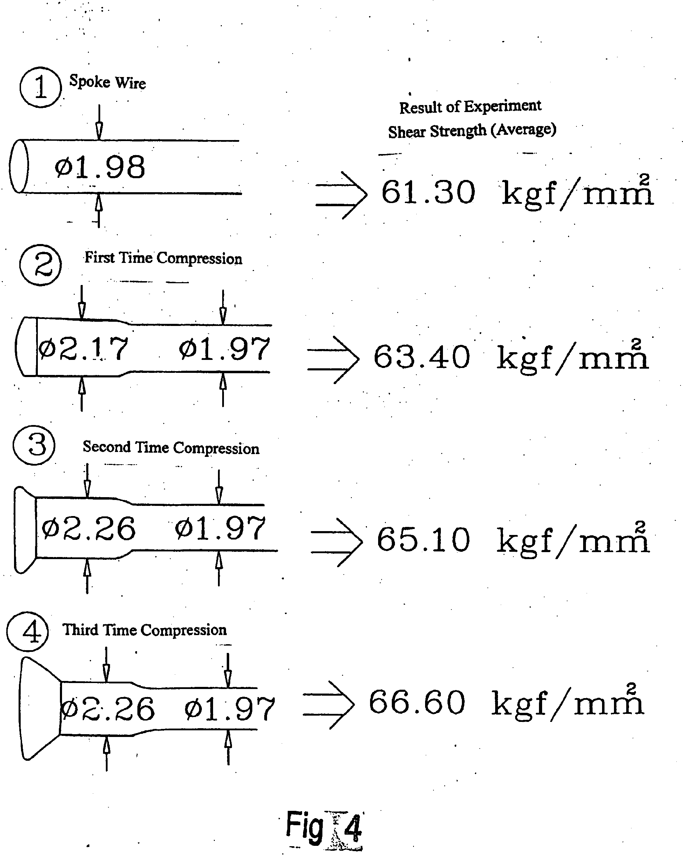

It can be known from Table 2 that during the three times of compression, the diameter of the spoke is changed as shown in Fig. 3. The result is as shown in Fig. 4. The final result of the spoke is as follows:

The actual shearing load is enhanced:

$$(267\text{-}190)/190 = 40.5\%$$

The actual cross-sectional area is enhanced:

$$\frac{\pi[(2.264)^2-(1.98)^2]/4}{\pi(1.98)^2/4} = 30.3\%$$

The actual shearing strength is enhanced:

$$( 66.6\text{-}61.3 )/ 61.3 = 8.65\%$$

The final product is tested with respect to tensile strength. The breaking place is at the spoke main body. The strength is 345kgf (The bending section is unbroken.)

It can be known from the above that the conventional spoke can be processed by means of the method of the present invention to achieve a spoke structure made of least material, while having highest strength. Therefore, the structural strength of the spoke is increased.

The present invention adopts a mechanically processing measure in which spoke 1 is many times compressed so that the diameter of specific sections of the spoke 1, such as the bending section 2 and the neck section 3, are naturally increased almost without changing the amount of the used material. At the same time, the tensile strength and shearing strength of the bending section 2 and the neck section 3 are increased.

The above embodiments are only used to illustrate the present invention, not intended to limit the scope thereof.

Table 1: Comparison in all kinds of Spokes (Tension, Weight, Cost)

| Type | Charts | Pulling Strength | Weight | Cost |
|---|---|---|---|---|
| Reformed spoke | | A High break point | A Lightest | A Lowercost |
| Plain spoke | | C | A | A+ |
| Plain spoke | | A+ | D | B |
| Swaged thread spoke | | A | C | C |
| Swaged spoke | | A | B+ | D |
| Double Butted spoke | | A | B | D |

Table 2

| TEST SAMPLE | Shear Area | Shear Load | Shear Strenth |
|---|---|---|---|
| | $mm^2$ | Kgf | $Kgf/mm^2$ |
| Reformed Spoke/Wire | 3.1 | 190.1 | 61.3 |
| Reformed Spoke/First Comporession | 3.7 | 234.7 | 63.4 |
| Reformed Spoke/Second Comporession | 4.0 | 261.2 | 65.1 |
| Reformed Spoke/Third Comporession | 4.0 | 267.1 | 66. 6 |

**Claims**

1. A method of manufacture of a spoke for a bicycle or motorcycle in which structural strength of parts of the spoke is increased during manufacture, the method comprising and being **characterised by**:

   starting with a section of constant cross-section wire and using a mechanical process to compress the wire a plurality of times and by the compressions:
   reducing a cross-sectional area of a spoke main body portion (1) of the wire;
   enlarging a cross-section of a bending section (2) and a neck section (3) of the wire;
   increasing structural strength of the bending section (2); and
   hardening the neck section (3) and the bending section (2) to enhance the strength thereof; and
   subsequently bending the wire at the bending section (2) to leave the neck section bent away from the main body.

2. A method as claimed in claim 1 wherein the wire is compressed three times.

3. A method as claimed in claim 1, wherein:

   in the first time compression the cross-sectional area of the spoke main body (1) is decreased and the cross-sectional areas of the bending section (2) and the neck sections are increased;
   in the second time compression a head (4) is formed at an end of the neck section (3) and the bending section (2) and the neck section (3) are increased in cross-sectional area while the cross-sectional area of the spoke main body (1) is kept constant; and
   in the third time compression the head (4)is increased in size while the cross-sectional areas of the bending section (2), neck section (3) and spoke main body (1) are kept constant.

4. A method as claimed in any one of the preceding claims wherein the material of the spoke is selected from a group comprising carbon steel, stainless steel, titanium and/or an alloy of steel.


**Patentansprüche**

1. Herstellungsverfahren einer Speiche für ein Fahrrad oder ein Motorrad, in weichem Strukturfestigkeit von Teilen der Speiche während des Herstellens erhöht wird, wobei das Verfahren umfasst und **gekennzeichnet ist, durch**:

   - Beginnen mit einem Abschnitt von Draht mit konstantem Querschnitt und Nutzen eines mechanischen Prozesses, um den Draht mehrmals zu komprimieren und **durch** die Komprimierungen:
   - Reduzieren einer Querschnittsfläche eines Speichenhauptkörperabschnitts (1) des Drahtes;
   - Vergrößern eines Querschnitts eines Krümmungsabschnitts (2) und eines Halsabschnitts (3) des Drahtes;
   - Erhöhung der Strukturfestigkeit des Krümmungsabschnitts (2); und
   - Härten des Halsabschnitts (3) und des Krümmungsabschnitts (2), um die Festigkeit davon zu steigern; und
   - anschließendes Krümmen des Drahtes bei dem Krümmungsabschnitt (2), um den Halsabschnitt von dem Hauptkörper weggekrümmt zu belassen.

2. Verfahren nach Anspruch 1, wobei der Draht drei Mal komprimiert wird.

3. Verfahren nach Anspruch 1, wobei:

   - bei der erstmaligen Komprimierung die Querschnittsfläche des Speichenhauptkörpers (1) verringert wird, und die Querschnittsflächen des Krümmungsabschnitts (2) und der Halsabschnitte vergrößert werden;
   - bei der zweitmaligen Komprimierung ein Kopf (4) an einem Ende des Halsabschnitts (3) gebildet wird, und der Krümmungsabschnitt (2) und der Halsabschnitt (3) in der Querschnittsfläche vergrößert werden, während die Querschnittsfläche des Speichenhauptkörpers (1) konstant gehalten wird; und
   - bei der drittmaligen Komprimierung der Kopf (4) in der Größe vergrößert wird, während die Querschnittsflächen des Krümmungsabschnitts (2), des Halsabschnitts (3) und des Speichenhauptkörpers (1) konstant gehalten werden.

4. Verfahren nach einem der vorhergehenden Ansprüche, wobei das Material der Speiche aus einer Gruppe ausgewählt wird, die Kohlenstoffstahl, Edelstahl, Titan und/oder eine Stahllegierung umfasst.

**Revendications**

1. Procédé de fabrication d'un rayon pour une bicyclette ou une motocyclette dans lequel la résistance structurale de parties du rayon est augmentée pendant la fabrication, le procédé comprenant et étant **caractérisé par** :

   le fait de partir d'un tronçon de fil de section transversale constante et d'utiliser un processus mécanique pour comprimer le fil plusieurs fois et, par les compressions :

   réduire l'aire en section transversale d'une partie de corps principal (1) de rayon du fil ;
   augmenter une section transversale d'un tronçon coudé (2) et d'un tronçon de col (3) du fil ;
   augmenter la résistance structurale du tronçon coudé (2) ; et
   durcir le tronçon de col (3) et le tronçon coudé (2) afin d'en augmenter la résistance ; et
   couder ensuite le fil au niveau du tronçon coudé (2) pour laisser le tronçon de col coudé à l'écart du corps principal.

2. Procédé selon la revendication 1, dans lequel le fil est comprimé trois fois.

3. Procédé selon la revendication 1, dans lequel :

   lors de la compression pour la première fois, l'aire en section transversale du corps principal (1) du rayon est diminuée et les aires en section transversale du tronçon coudé (2) et des tronçons de col sont augmentées ;
   lors de la compression pour la deuxième fois, une tête (4) est formée à une extrémité du tronçon de col (3) et le tronçon coudé (2) et le tronçon de col (3) sont augmentés en aires en section transversale tandis que l'aire en section transversale du corps principal du rayon est maintenue constante ; et
   dans la compression pour la troisième fois, la taille de la tête (4) est augmentée tandis que les aires en section transversale du tronçon de corps (2), du tronçon de col (2) et du corps principal (1) du rayon sont maintenues constantes.

4. Procédé selon l'une quelconque des revendications précédentes, dans lequel la matière du rayon est choisie dans un groupe comprenant de l'acier au carbone, de l'acier inoxydable, du titane et/ou un alliage d'acier.

Fig 1

Fig 2

Shear Load (kgf) VS Compression Times (N)

kgf

267
261
234
190

0   1   2   3   N

(Times)

Shear Strength ($kgf/mm^2$) VS Compression Times (N)

$kgf/mm^2$

66.6
65.1
63.4
61.3

0   1   2   3   N

(Times)

Fig 3

① Spoke Wire

ø1.98

Result of Experiment
Shear Strength (Average)

$\Rightarrow$ 61.30 kgf/mm$^2$

② First Time Compression

ø2.17   ø1.97

$\Rightarrow$ 63.40 kgf/mm$^2$

③ Second Time Compression

ø2.26   ø1.97

$\Rightarrow$ 65.10 kgf/mm$^2$

④ Third Time Compression

ø2.26   ø1.97

$\Rightarrow$ 66.60 kgf/mm$^2$

Fig 4

**EP 1 479 532 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TW 261953
- TW 317821
- TW 385284
- TW 398423
- TW 4485851
- TW 516517
- TW 511588
- DE 8603889 U